# EUROPEAN PATENT SPECIFICATION

(11) **EP 2 452 945 B1**
(45) Date of publication and mention of the grant of the patent: **30.07.2014**
(21) Application number: 10797016.2
(22) Date of filing: 23.06.2010
(51) Int. Cl.: C07F 9/40

(54) **POLYFLUOROALKYLPHOSPHONIC ACID ESTERS AND PROCESSES FOR PRODUCTION OF SAME**
POLYFLUORALKYLPHOSPHONSÄUREESTER UND VERFAHREN ZU IHRER HERSTELLUNG
ESTER D'ACIDE POLYFLUOROALKYLE PHOSPHONIQUE ET PROCÉDÉ DE PRODUCTION DE CELUI-CI

(30) Priority: 10.07.2009 JP 2009163257
(43) Date of publication of application: 16.05.2012
(73) Proprietor: Unimatec Co., Ltd., Tokyo 105-8585 (JP)
(72) Inventor: MURATA Seiichiro, Kitaibaraki-shi Ibaraki 319-1544 (JP); SATO Katsuyuki, Kitaibaraki-shi Ibaraki 319-1544 (JP)
(74) Representative: Adam, Holger
(86) International application number: PCT/JP2010/060621
(87) International publication number: WO 2011/004705

(56) References cited:
- WO-A1-03/102003
- WO-A1-2007/105633
- JP-A- 58 180 597
- JP-B- 51 018 417
- JP-B2- 2 045 572
- JP-B2- 3 078 244
- TUMANSKII B L ET AL: "Free-Radical Addition of Dialkyl Phosphites to Branched Fluoro-Olefines", PHOSPHORUS, SULFUR AND SILICON AND THE RELATED ELEMENTS, TAYLOR & FRANCIS INC, US, vol. 51/52, 1 January 1990 (1990-01-01), page 668, XP009164621, ISSN: 1042-6507
- IVIN S Z ET AL: "Reactions of Dialkyl Phosphites and Alkyl Phosphonites with Perfluoro-Propylene under the Influence of Gamma-Irradiation", JOURNAL OF APPLIED CHEMISTRY OF USSR, CONSULTANTS BUREAU, NEW YORK, NY, US, vol. 42, 1 January 1969 (1969-01-01), pages 444-445, XP009164622, ISSN: 0021-888X

## Description

### TECHNICAL FIELD

The present invention relates to a process for producing a polyfluoroalkylphosphonic acid ester. The polyfluoroalkylphosphonic acid ester can be effectively used, for example, as a starting material for the synthesis of mold-releasing agents or as an additive for lubricating oil.

### BACKGROUND ART

Polyfluoroalkylphosphonic acid esters are widely used as starting materials for the synthesis of mold-releasing agents. Compounds having a C₈-C₁₂ perfluoroalkyl group are most likely to develop mold release performance when used as mold-releasing agents. In particular, C₈ telomer compounds of the formula:

CF₃(CF₂)₇CH₂CH₂P(O)(OC₂H₅)₂

are preferably used for this kind of application (see Patent Documents 1 to 4).

Incidentally, it is reported that telomer compounds having a C₈-C₁₂ perfluoroalkyl group are biologically degraded in the environment and converted to compounds having relatively high bioaccumulation and environmental concentration, causing concerns for exposure during treatment processes, and for release or diffusion from waste, treated substrates, etc., into the environment. Moreover, compounds having a perfluoroalkyl group containing 14 or more carbon atoms are very difficult to handle because of their physical and chemical properties, and hence, such compounds are rarely used in practice.

Furthermore, as for telomer compounds having a perfluoroalkyl group containing 8 or more carbon atoms, generation and incorporation of perfluorooctanoic acids with high bioaccumulation potential is unavoidable during the production of these compounds. For these reasons, companies that produce such telomer compounds have retreated from the production of the compounds or promoted the use of alternative compounds having a perfluoroalkyl group containing 6 or less carbon atoms.

However, compounds having a perfluoroalkyl group containing 6 or less carbon atoms cause a significant decrease in orientation on the surface of a treated substrate, and the melting point, glass transition point (Tg), etc., of the compounds are markedly lower than those of C₈ compounds. Accordingly, the compounds are highly influenced by their environmental conditions, such as temperature, humidity, stress, and contact with organic solvents. Consequently, the desired performance cannot be sufficiently achieved, and durability and other properties are affected.
Patent document 6 discloses the preparation of CF₃(CF₂)₃CH₂CH₂PO₃H₂ comprising reacting 1-iodo-1H,1H,2H,2H-perfluorohexane and triethyl phosphite.
Patent document 7 discloses the preparation of C₈F₁₇CH₂CH₂P(O)(OC₂H₅)₂ comprising reacting C₈F₁₇CH₂CH₂I with P(OC₂H₅)₃.
Document 1 discloses the free-radical addition of dialkyl phosphites to branched fluoro-olefines.
Document 2 discloses the preparation of compounds (CH₃O)₂P(O)CF₂CFHCF₃, (C₂H₅O)₂P(O)CF₂CFHCF₃ and (i-C₃H₇O)₂P(O)CF₂CFHCF₃ comprising reacting the corresponding (RO)₂P(O)H with CF₂=CF-CF₃.

### PRIOR ART DOCUMENT

### PATENT DOCUMENT

Patent Document 1 : JP-B-2-45572
Patent Document 2 : JP-B-3-78244
Patent Document 3 : JP-B-4-4923
Patent Document 4 : JP-B-4-11366
Patent Document 5 : WO 2007/105633 A1
Patent Document 6: WO 2003/102003 A1
Patent Document 7: JP 58 180597 A
Document 1: Tumanskii B.L. et al.: "Free-Radical Addition of Dialkyl Phosphites to Branched Fluoro-Olefines", PHOSPHORUS, SULFUR AND SILICON AND THE RELATED ELEMENTS, TAYLOR & FRANCIS INC, US, vol. 51/52, January 1, 1990, page 668
Document 2: Ivin S.Z. et al.: "Reactions of Dialkyl Phosphites and Alkyl Phosphonites with Perfluoro-Propylene under the Influence of Gamma-Irradiation", JOURNAL OF APPLIED CHEMISTRY OF USSR, CONSULTANTS BUREAU, NEW YORK, NY, US, vol. 42, January 1, 1969, pages 444-445.

### OUTLINE OF THE INVENTION

### PROBLEM TO BE SOLVED BY THE INVENTION

An object of the present invention is to provide a process for producing a polyfluoroalkylphosphonic acid ester having a perfluoroalkyl group containing 6 or less carbon atoms, which is said to have low bioaccumulation potential, and effectively usable, for example, as a starting material for the synthesis of mold-releasing agents or as an additive for lubricating oil.

### MEANS FOR SOLVING THE PROBLEM

The present invention provides a polyfluoroalkylphosphonic acid ester represented by the general formula:

CₙF₂ₙ₊₁(CH₂CF₂)ₐ(CF₂CF₂)_{b}(CH₂CH₂) P(O)(OR)₂ [I]

wherein R is an alkyl group having 1 to 4 carbon atoms, n is an integer of 1 to 6, a is an integer of 1 to 4, b is an integer of 1 to 3.

The polyfluoroalkylphosphonic acid ester is produced by a process comprising reacting a polyfluoro-1-alkene represented by the general formula:

CₙF₂ₙ₊₁(CH₂CF₂)ₐ(CF₂CF₂)_{b}CH=CH₂ [III]

wherein n is an integer of 1 to 6, a is an integer of 1 to 4, and b is an integer of 1 to 3, with a dialkyl phosphite represented by the general formula:

(RO)₂P(O)H

wherein R is an alkyl group having 1 to 4 carbon atoms, in an addition reaction, wherein the addition reaction is carried out in the presence of an organic peroxide. The polyfluoro-1-alkene can be obtained from a polyfluoroalkyl iodide represented by the general formula:

CₙF₂ₙ₊₁(CH₂CF₂)ₐ(CF₂CF₂)_{b}(CH₂CH₂)_{c}I [II]

wherein n is an integer of 1 to 6, a is an integer of 1 to 4, b is an integer of 1 to 3, and c is 1.

### EFFECT OF THE INVENTION

When released into the environment, the polyfluoroalkylphosphonic acid ester obtained according to the process of the present invention undergoes HF-elimination in the -CH₂CF₂- bonding site of the molecule, and a double bond is formed. The result is then subjected to ozone decomposition etc. to have a structure that is easily decomposed into a compound with low environmental concentration and low bioaccumulation potential. Moreover, the polyfluoroalkylphosphonic acid ester does not produce environmental loading substances (e.g., perfluoroalkyl carboxylic acids) in the production process thereof. Furthermore, as with conventionally used compounds, the polyfluoroalkylphosphonic acid ester can be effectively used, for example, as a starting material for the synthesis of mold-releasing agents or as an additive for lubricating oil.

### EMBODIMENTS FOR CARRYING OUT THE INVENTION

The polyfluoroalkylphosphonic acid easter [I] is obtained by a process of reacting the polyfluoro-1-alkene [III] with a diallyl phosphite (RO)₂P(O)H. The polyfluoro-1-alkene [III], which is used as a starting material compound, can be obtained from a polyfluoroalkyl iodide [II], which is a known compound, and is disclosed in Patent Document 5.

The polyfluoroalkyl iodide [II] is produced by the addition reaction of a terminally iodized compound represented by the general formula:

CₙF₂ₙ₊₁(CH₂CF₂)ₐ(CF₂CF₂)_{b}I [IV]

with ethylene. The ethylene addition reaction is carried out in such a manner that the compound [IV] above is subjected to an addition reaction with pressurized ethylene in the presence of a peroxide initiator. The number of addition is 1 to 3,
and for use in the process of the present invention is 1,
although depending on the reaction conditions. Although the reaction temperature depends on the decomposition temperature of the initiator used, the reaction is generally conducted at about 80 to 120°C; when a peroxide initiator that decomposes at a low temperature is used, the reaction can be conducted at 80°C or below.

As a peroxide initiator, di-tert-butyl peroxide, di(tert-butylcyclohexyl)peroxy dicarbonate, dicetylperoxy dicarbonate, di-n-propylperoxy dicarbonate, diisopropylperoxy dicarbonate, di-sec-butylperoxy dicarbonate, or the like is used at a ratio of about 1 to 5 mol% with respect to the compound [IV], in terms of the progress and controllability of the reaction.

The terminally iodized compound [IV] is synthesized through a series of the following steps:
(1) A perfluoroalkyl iodide represented by the general formula:

   CₙF₂ₙ₊₁I (n: 1 to 6)

   is reacted with vinylidene fluoride in the presence of a peroxide initiator as described above in an amount of about 0.1 to 0.5 mol% based on the amount of the starting material compound to obtain a compound represented by the general formula:

   CₙF₂ₙ₊₁(CH₂CF₂)ₐI [V]
(2) The compound represented by the general formula [V] is reacted with tetrafluoroethylene in the presence of a peroxide initiator to thereby obtain a terminally iodized compound represented by the general formula [IV] described above. In the general formula [IV], b is an integer of 1 to 3, preferably 1 or 2. The organic peroxide initiator as mentioned above can be used in this reaction in the same amount as in step (1).

Although the reaction temperature of the addition reaction of vinylidene fluoride or tetrafluoroethylene depends on the decomposition temperature of the initiator used, the use of a peroxide initiator that decomposes at a low temperature allows the reaction to occur at 80°C or less under low-pressure conditions. The reaction is carried out in the following manner. The perfluoroalkyl iodide CₙF₂ₙ₊₁I or the compound [V] is charged in an autoclave, and the internal temperature is increased to about 10 to 60°C. For example, when the temperature reaches 50°C, a peroxide initiator dissolved in the perfluoroalkyl iodide CₙF₂ₙ₊₁I or the compound [V] is added thereto. When the internal temperature reaches 55°C, for example, vinylidene fluoride or tetrafluoroethylene is added in batches while maintaining the pressure at about 0.1 to 0.6 MPa. After the desired amount of vinylidene fluoride or tetrafluoroethylene is added in batches, aging is carried out, for example, at a temperature of about 55 to 80°C for about one hour. The amount of vinylidene fluoride or tetrafluoroethylene added affects the number of vinylidene fluoride skeletons a or tetrafluoroethylene skeletons b added by the reaction. Generally, a mixture of various a values and b values is formed.

The fact that these reactions can be carried out at low temperatures indicates that not only energy usage can be reduced, but also corrosion due to hydrofluoric acid etc. in facilities can be prevented, thereby reducing the frequency of updating the facilities. Additionally, since more inexpensiveness materials can be used, capital investment costs can also be kept low, in addition to the decrease in update frequency.

Specific examples of the compound [IV] to which ethylene is added include compounds listed below. These compounds are mixtures of oligomers having various a values and b values. Oligomers that have specific a and b values can be isolated by distilling the mixtures. Oligomers that do not have predetermined a and b values can be reused after isolation or as the mixtures in the reaction of increasing the number of oligomers with vinylidene fluoride or tetrafluoroethylene.

C₂F₅(CH₂CF₂)(CF₂CF₂)I

C₂F₅(CH₂CF₂)(CF₂CF₂)₂I

C₂F₅(CH₂CF₂)₂(CF₂CF₂)I

C₂F₅(CH₂CF₂)₂(CF₂CF₂)I

C₂F₅(CH₂CF₂)(CF₂CF₂)₃I

C₄F₉(CH₂CF₂)(CF₂CF₂)I

C₄F₉(CH₂CF₂)(CF₂CF₂)I

C₄F₉(CH₂CF₂)₂(CF₂CF₂)I

C₄F₉(CH₂CF₂)₂(CF₂CF₂)₂I

C₄F₉(CH₂CF₂)(CF₂CF₂)₃I

The polyfluoroalkylphosphonic acid ester of the formula:

CₙF₂ₙ₊₁(CH₂CF₂)ₐ(CF₂CF₂)_{b}(CH₂CH₂)P(O)(OR)₂ [I]

is produced by reacting a polyfluoro-1-alkene represented by the general formula:

CₙF₂ₙ₊₁(CH₂CF₂)ₐCCF₂CF₂)_{b}CH=CH₂ [III]

with a dialkyl phosphite represented by the general formula: (RO)₂P(O)H.

The reaction of polyfluoro-1-alkene with dialkyl phosphite (RO)₂P(O)H having a lower alkyl group containing 1 to 4 carbon atoms (e.g., dimethyl phosphite, diethyl phosphite, dipropyl phosphite, or tributyl phosphite) is carried out in the presence of an organic peroxide.

As a peroxide initiator, di-tert-butyl peroxide, di(tert-butylcyclohexyl)peroxy dicarbonate, dicetylperoxy dicarbonate, di-n-propylperoxy dicarbonate, diisopropylperoxy dicarbonate, di-tert-butylperoxy dicarbonate, or the like is used at a ratio of about 1 to 5 mol% with respect to the polyfluoro-1-alkene, in terms of the progress and controllability of the reaction.

The polyfluoro-1-alkene [III], which is used as a starting material for this reaction, is obtained by reacting a polyfluoroalkyl iodide represented by the general formula [II] above wherein c is 1, i.e., a compound of the general formula:

CₙF₂ₙ₊₁(CH₂CF₂)ₐ(CF₂CF₂)_{b}(CH₂CH₂)I [II']

with a basic compound to carry out a terminal HI-elimination reaction.

The HI-elimination reaction at position 1 is carried out by reacting the polyfluoroalkyl iodide [II'] with an inorganic basic compound in the presence of a phase transfer catalyst, or by reacting the polyfluoroalkyl iodide [II'] with a nitrogen-containing organic basic compound. The former method is preferably used, so that a polyfluoro-1-alkene having a purity as high as 99% is obtained with high yield. In this case, it is essential to use a phase transfer catalyst in combination with an inorganic basic compound. When no phase transfer catalyst is used, the HI-elimination reaction can hardly proceed.

Examples of inorganic basic compounds include lithium hydroxide, sodium hydroxide, potassium hydroxide, magnesium hydroxide, calcium hydroxide, and other monovalent or divalent metal hydroxides; sodium carbonate, sodium hydrogen carbonate, potassium carbonate, potassium hydrogen carbonate, and other monovalent or divalent metal carbonates; and the like. As a phase transfer catalyst to be used in combination with such an inorganic basic compound, a quaternary onium salt, Crown ether, or the like is used at a ratio of about 0.01 to 10 mol %, preferably about 0.1 to 3 mol %, relative to the inorganic basic compound.

As the quaternary onium salt, at least one of an ammonium salt and a phosphonium salt represented by the following general formulae can be used.

(R₁R₂R₃R₄N)⁺X⁻ (R₁R₂R₃R₄P)⁺X⁻

- R₁ to R₄:: an alkyl group having 1 to 25 carbon atoms, an alkoxy group, an aryl group, an alkylaryl group, an aralkyl group, or a polyoxyalkylene group; alternatively, two or three groups of these groups can form, together with P or N, a heterocyclic structure.
- X⁻:: an anion, such as Cl⁻, Br⁻, I⁻, HSO₄⁻, H₂PO₄⁻, RCOO⁻, ROSO₂⁻, RSO⁻, ROPO₂H⁻, or CO₃⁻

Examples of nitrogen-containing organic basic compounds include diethylamine, triethylamine, pyridine or derivatives thereof, diethanolamine, triethanolamine, 1,8-diazabicyclo[5.4.0]-7-undecene, diazabicyclononene, and the like. Preferably, 1,8-diazabicyclo[5.4.0]-7-undecene having low nucleophilicity is used.

When a nitrogen-containing organic basic compound is used, a large amount of polyfluoroalkadiene mixture is produced as a by-product, in addition to the target polyfluoro-1-alkene; however, the polyfluoro-1-alkene and the polyfluoroalkadiene mixture can be separated by fractional distillation based on the difference in vapor temperature during distillation under reduced pressure.

Such an inorganic or organic basic compound is used at a molar ratio of about 0.1 to 10, preferably 0.95 to 2.5, more preferably 1.0 to 1.5, with respect to the polyfluoroalkyl iodide [II'].

### EXAMPLES

The following describes the present invention with reference to Examples.

### Reference Example 1

In a 1,200-ml autoclave equipped with a stirrer and a thermometer, 603 g (0.99 mol) of a compound of the formula:

CF₃(CF₂)₃(CH₂CF₂)(CF₂CF₂)₂I (99GC%)

and 7 g of di-tert-butyl peroxide were charged, and the autoclave was degassed by a vacuum pump. After the internal temperature was raised to 80°C by heating, ethylene was sequentially introduced so that the internal pressure was 0.5 MPa. When the internal pressure dropped to 0.2 MPa, ethylene was introduced again to return the pressure to 0.5 MPa; this operation was repeated. While maintaining the internal temperature at 80 to 115°C, 41 g (1.45 mol) of ethylene was introduced over about 3 hours. The content was collected at an internal temperature of 50°C or less, thereby obtaining 637 g (yield: 98.8%) of a compound of the formula:

CF₃(CF₂)₃(CH₂CF₂)(CF₂CF₂)₂(CH₂CH₂)I (98GC%)

i.e., the formula:

C₄F₉CH₂CF₂)₅CH₂CH₂I.

### Reference Example 2

In a 1,200-ml autoclave equipped with a stirrer and a thermometer, 609 g (1.19 mol) of a compound of the formula:

CF₃(CF₂)₃CH₂CF₂)(CF₂CF₂)I (99.3GC%)

and 6 g of di-tert-butyl peroxide were charged, and the autoclave was degassed by a vacuum pump. After the internal temperature was raised to 80°C by heating, ethylene was sequentially introduced so that the internal pressure was 0.5 MPa. When the internal pressure dropped to 0.2 MPa, ethylene was introduced again to return the pressure to 0.5 MPa; this operation was repeated. While maintaining the internal temperature at 80 to 115°C, 50 g (1.79 mol) of ethylene was introduced over about 3 hours. The content was collected at an internal temperature of 50°C or less, thereby obtaining 640 g (yield: 97.3%) of a compound of the formula:

CF₃(CF₂)₃(CH₂CF₂)(CF₂CF₂)(CH₂CH₂)I (97.4GC%).

### Reference Example 3

In a 1,200-ml autoclave equipped with a stirrer and a thermometer, 605 g (0.98 mol) of a compound of the formula:

CF₃(CF₂)(CH₂CF₂)(CF₂CF₂)₃I (98.7GC%)

and 7 g of di-tert-butyl peroxide were charged, and the autoclave was degassed by a vacuum pump. After the internal temperature was raised to 80°C by heating, ethylene was sequentially introduced so that the internal pressure was 0.5 MPa. When the internal pressure dropped to 0.2 MPa, ethylene was introduced again to return the pressure to 0.5 MPa; this operation was repeated. While maintaining the internal temperature at 80 to 115°C, 43 g (1.53 mol) of ethylene was introduced over about 3 hours. The content was collected at an internal temperature of 50°C or less, thereby obtaining 630 g (yield: 98.5%) of a compound of the formula:

CF₃(CF₂)(CH₂CF₂)(CF₂CF₂)₃(CH₂CH₂)I (97.7GC%).

### Reference Example 4

In a 1,200-ml autoclave equipped with a stirrer and a thermometer, 605 g (1.18 mol) of a compound of the formula:

CF₃(CF₂)(CH₂CF₂)(CF₂CF₂)₂I (99.4GC%)

and 6 g of di-tert-butyl peroxide were charged, and the autoclave was degassed by a vacuum pump. After the internal temperature was raised to 80°C by heating, ethylene was sequentially introduced so that the internal pressure was 0.5 MPa. When the internal pressure dropped to 0.2 MPa, ethylene was introduced again to return the pressure to 0.5 MPa; this operation was repeated. While maintaining the internal temperature at 80 to 115°C, 50 g (1.79 mol) of ethylene was introduced over about 3 hours. The content was collected at an internal temperature of 50°C or less, thereby obtaining 639 g (yield: 98.0%) of a compound of the formula:

CF₃(CF₂)(CH₂CF₂)(CF₂CF₂)₂(CH₂CH₂)I (97.3GC%).

### Reference Example 5

In a 1,200-ml autoclave equipped with a stirrer and a thermometer, 610 g (1.48 mol) of a compound of the formula:

CF₃(CF₂)(CH₂CF₂)(CF₂CF₂)I (99.8GC%)

and 7 g of di-tert-butyl peroxide were charged, and the autoclave was degassed by a vacuum pump. After the internal temperature was raised to 80°C by heating, ethylene was sequentially introduced so that the internal pressure was 0.5 MPa. When the internal pressure dropped to 0.2 MPa, ethylene was introduced again to return the pressure to 0.5 MPa; this operation was repeated. While maintaining the internal temperature at 80 to 115°C, 62 g (2.23 mol) of ethylene was introduced over about 3 hours. The content was collected at an internal temperature of 50°C or less, thereby obtaining 644 g (yield: 98.0%) of a compound of the formula:

CF₃(CF₂)(CH₂CF₂)(CF₂CF₂)(CH₂CH₂)I (98.7GC%).

### Reference Example 6

In a 1,200-ml autoclave equipped with a stirrer and a thermometer, 1,200 g (2.2 mol) of a compound of the formula:

CF₃(CF₂)₃(CH₂CF₂)(CF₂CF₂)(CH₂CH₂)I (99.7GC%)

and 10 g of di-tert-butyl peroxide were charged, and the autoclave was degassed by a vacuum pump. After the internal temperature was raised to 100°C by heating, ethylene was sequentially introduced so that the internal pressure was 7.4 MPa. When the internal pressure dropped to 7.0 MPa, ethylene was introduced again to return the pressure to 7.4 MPa; this operation was repeated. While maintaining the internal temperature at 100 to 115°C, 76 g (2.7 mol) of ethylene was introduced over about 6 hours. The content was collected at an internal temperature of 50°C or less, thereby obtaining 1,237 g (yield: 95.9%) of a compound of the formula:

CF₃(CF₂)₃(CH₂CF₂)(CF₂CF₂)(CH₂CH₂)₂I (98.5GC%).

### Example 1

(1) In a 50-ml glass reactor equipped with a cooling condenser, a thermocouple, and a magnet stirrer, 5 g (7.8 mmol) of 3,3,4,4,5,5,6,6,7,7,9,9,10,10,11,11,12,12,12-nonadecafluoro-1-iodododecane of the formula: C₄F₉CH₂CF₂)₅CH₂CH₂I obtained in Reference Example 1 above was suspended in an aqueous solution prepared by dissolving 0.34 g (8.5 mmol) of sodium hydroxide and 0.03 g (0.13 mmol) of tetrabutylammonium chloride in 15 ml of water. The reaction was carried out by continuous stirring for about 72 hours at room temperature.

After the reaction was completed, the lower layer obtained by static phase separation was washed twice with 20 ml of water and then once with a saturated saline solution. The obtained reaction product solution was dehydrated and dried over anhydrous magnesium sulfate. The recovered solution was purified by distillation under reduced pressure, thereby obtaining 3.2 g (yield: 80%) of a product A as a fraction with a vapor temperature of 76 to 77°C/1 kPa (purity: 99%). The structure of the obtained fraction was determined by ¹H-NMR and ¹⁹F-NMR.
- Product A:: 3,3,4,4,5,5,6,6,7,7,9,9,10,10,11,11,12,12,12-nonadecafluoro-1-dodecenc CF₃CF₂CF₂CF₂CH₂CF₂CF₂CF₂CF₂CF₂CH=CH₂
- ¹H-NMR (CDCl₃, TMS):: δ2.89 (CH₂CF₂) 5.79 (CH=CH₂) 5.97 (CH=CH₂)
- ¹⁹F-NMR (CDCl₃, C₆F₆):: ppm -82.1 (CF₃) -126.9 (CF₃CF₂CF₂CF₂) -124.8 (CF₃CF₂CF₂CF₂) -113.2 (CF₂CH₂CF₂) -113.0 (CF₂CH₂CF₂) -121.7 (CH₂CF₂CF₂CF₂) -124.2 (CH₂CF₂CF₂CF₂) -124.6 (CF₂CF₂CH=CH₂) -114.8 (CF₂CF₂CH=CH₂)

(2) In a 1-L, four-necked flask equipped with a thermometer and a condenser, 160 g (1.16 mol) of diethyl phosphite was charged and stirred while heating at 150°C. A mixed solution of 500 g (0.97 mol) of the nonadecafluoro-1-dodecene (product A; 99GC%) obtained in step (1) above and 2.3 g (16 mmol) of di-tert-butyl peroxide was added dropwise thereto. After completion of dropwise addition, the resultant mixture was further stirred for one hour. Thereafter, the reaction mixture was washed with water, and a crude reaction product separated as a lower layer was subjected to simple distillation under reduced pressure at an internal pressure of 0.2 kPa, an internal temperature of 160 to 170°C, and an overhead temperature of 150 to 155°C. Thus, 496 g (yield: 77%) of a purified reaction product (97GC%) was obtained.

The results of ¹H-NMR and ¹⁹F-NMR confirmed that the resulting purified reaction product was a compound represented by the following formula:

CF₃(CF₂)₃(CH₂CF₂)(CF₂CF₂)₂(CH₂CH₂)P(O)(OCH₂CH₃)₂

- ¹H-NMR (CD₃OD, TMS):: δ3.37 (CH₂CF₂) 2.42 (CH₂CH₂) 2.07 (CH₂CH₂) 4.13 (CH₂CH₃) 1.36 (CH₂CH₃)
- ¹⁹F-NMR (CD₃OD, C₆F₆):: ppm -80.2 (CF₃) -124.6 (CF₃CF₂CF₂CF₂) -122.3 (CF₃CF₂CF₂CF₂) -110.0 (CF₂CH₂CF₂) -110.0 (CF₂CH₂CF₂) -120.0 (CH₂CF₂CF₂CF₂) -121.6 (CH₂CF₂CF₂CF₂) -122.1 (CF₂CF₂CH₂CH₂) -113.8 (CF₂CF₂CH₂CH₂)

### Example 2

(1) In Example 1, 4.2 g of the polyfluoroalkyl iodide of the following formula:

CF₃(CF₂)₃(CH₂CF₂)(CF₂CF₂)(CH₂CH₂)I = C₄F₉CH₂(CF₂)₃CH₂CH₂I

obtained in Reference Example 2 above was used in place of the compound of the formula:

CF₃(CF₂)₃(CH₂CF₂)(CF₂CF₂)₂(CH₂CH₂)I = C₄F₉CH₂(CF₂)₅CH₂CH₂I.

As a result, 2.6 g (yield: 81 %) of a compound of the formula: C₄F₉CH₂(CF₂)₃CH=CH₂, which was a fraction with a vapor pressure of 63 to 65°C/1 kPa, was obtained as a product B.

- Product B:: 3,3,4,4,5,5,7,7,8,8,9,9,10,10,10-pentadecafluoro-1-decene CF₃CF₂CF₂CF₂CH₂CF₂CF₂CF₂CH=CH₂
- ¹H-NMR (CDCl₃, TMS):: δ2.89 (CH₂CF₂) 5.79 (CH=CH₂) 5.97 (CH=CH₂)
- ¹⁹F-NMR (CDCl₃, C₆F₆):: ppm -82.0 (CF₃) -126.7 (CF₃CF₂CF₂CF₂) -124.9 (CF₃CF₂CF₂CF₂) -113.0 (CF₂CH₂CF₂) -111.5 (CF₂CH₂CF₂) -111.8 (CH₂CF₂CF₂CF₂) -114.8 (CH₂CF₂CF₂CF₂)

(2) In a 1-L, four-necked flask equipped with a thermometer and a condenser, 200 g (1.45 mol) of diethyl phosphite was charged and stirred while heating at 150°C. A mixed solution of 507 g (1.21 mol) of the pentadecafluoro-1-decene (product B; 99GC%) obtained in step (1) above and 2.8 g (19 mmol)of di-tert-butyl peroxide was added dropwise thereto. After completion of dropwise addition, the resultant mixture was further stirred for one hour. Thereafter, the reaction mixture was washed with water, and a crude reaction product separated as a lower layer was subjected to simple distillation under reduced pressure at an internal pressure of 0.2 kPa, an internal temperature of 145 to 155°C, and an overhead temperature of 138 to 142°C. Thus, 512 g (yield: 74.8%) of a purified reaction product (98GC%) was obtained.

The results of ¹H-NMR and ¹⁹F-NMR confirmed that the resulting purified reaction product was a compound represented by the following formula:

CF₃(CF₂)₃(CH₂CF₂)(CF₂CF₂)(CH₂CH₂)P(O)(OCH₂CH₃)₂

- ¹H-NMR (CDCl₃, TMS):: δ3.37 (CH₂CF₂) 2.43 (CH₂CH₂) 2.07 (CH₂CH₂) 4.13 (CH₂CH₃) 1.36 (CH₂CH₃)
- ¹⁹F-NMR (CDCl₃, C₆F₆):: ppm -82.0 (CF₃) -124.0 (CF₃CF₂CF₂CF₂) -122.3 (CF₃CF₂CF₂CF₂) -110.3 (CF₂CH₂CF₂) -109.8 (CF₂CH₂CF₂) -124.4 (CH₂CF₂CF₂CF₂) -113.1 (CH₂CF₂CF₂CF₂)

### Example 3

(1) In Example 1, 5.0 g of the polyfluoroalkyl iodide of the following formula:

CF₃(CF₂)(CH₂CF₂)(CF₂CF₂)₃(CH₂CH₂)I = C₂F₅CH₂CF₂)₇CH₂CH₂I

obtained in Reference Example 3 above was used in place of the compound of the formula:

CF₃(CF₂)₃(CH₂CF₂)(CF₂CF₂)₂(CH₂CH_{Z})I = C₄F₉CH₂(CF₂)₅CH₂CH₂I.

As a result, 2.0 g (yield: 50%) of a compound of the formula: C₂F₅CH₂CF₂)₇CH=CH₂, which was a fraction with a vapor pressure of 75 to 77°C/1 kPa, was obtained as a product C.

- Product C:: 3,3,4,4,5,5,6,6,7,7,8,8,9,9,11,11,12,12,12-nonadecafluoro-1-dodecene CF₃CF₂CH₂CF₂CF₂CF₂CF₂CF₂CF₂CF₂CH=CH₂
- ¹H-NMR (CDCl₃, TMS):: δ2.89 (CH₂CF₂) 5.79 (CH=CH₂) 5.97 (CH=CH₂)
- ¹⁹F-NMR (CDCl₃, C₆F₆):: ppm -87.1 (CF₃) -116.8 (CF₃CF₂CH₂CF₂) -113.0 (CF₃CF₂CH₂CF₂) -121.7 (CH₂CF₂CF₂CF₂) -122.7 (CH₂CF₂CF₂CF₂) -124.2 (CF₂CF₂CF₂CF₂CH=CH₂) -122.4 (CF₂CF₂CF₂CF₂CH=CH₂) -122.7 (CF₂CF₂CF₂CF₂CH=CH₂) -114.8 (CF₂CF₂CF₂CF₂CH=CH₂)

(2) In a 1-L, four-necked flask equipped with a thermometer and a condenser, 160 g (1.16 mol) of diethyl phosphite was charged and stirred under heating at 150°C. A mixed solution of 500 g (0.95 mol) of the nonadecafluoro-1-dodecene (product C; 97GC%) obtained in step (1) above and 2.3 g (16 mmol) of di-tert-butyl peroxide was added dropwise thereto. After completion of dropwise addition, the resultant mixture was further stirred for one hour. Thereafter, the reaction mixture was washed with water, and a crude reaction product separated as a lower layer was subjected to simple distillation under reduced pressure at an internal pressure of 0.2 kPa, an internal temperature of 160 to 170°C, and an overhead temperature of 150 to 155°C. Thus, 475 g (yield: 74.8%) of a purified reaction product (97GC%) was obtained.

The results of ¹H-NMR and ¹⁹F-NMR confirmed that the resulting purified reaction product was a compound represented by the following formula:

CF₃(CF₂)(CH₂CF₂)(CF₂CF₂)₃(CH₂CH₂)P(O)(OCH₂CH₃)₂

- ¹H-NMR (CDCl₃, TMS):: δ3.34 (CH₂CF₂) 2.42 (CH₂CH₂) 2.07 (CH₂CH₂) 4.13 (CH₂CH₃) 1.36 (CH₂CH₃)
- ¹⁹F-NMR (CDCl₃, C₆F₆):: ppm -85.3 (CF₃) -114.0 (CF₃CF₂CH₂CF₂) -110.2 (CH₂CF₂CF₂CF₂CF₂CF₂CF₂CF₂) -120.0 (CH₂CF₂CF₂CF₂CF₂CF₂CF₂CF₂) -119.5 (CH₂CF₂CF₂CF₂CF₂CF₂CF₂CF₂) -120.3 (CH₂CF₂CF₂CF₂CF₂CF₂CF₂CF₂) -121.4 (CH₂CF₂CF₂CF₂CF₂CF₂CF₂CF₂) -122.0 (CH₂CF₂CF₂CF₂CF₂CF₂CF₂CF₂) -114.8 (CH₂CF₂CF₂CF₂CF₂CF₂CF₂CF₂)

### Example 4

(1) In Example 1, 4.2 g of the polyfluoroalkyl iodide of the following formula:

CF₃(CF₂)(CH₂CF₂)(CF₂CF₂)₂(CH₂CH₂)I = C₂F₅CH₂(CF₂)₅CH₂CH₂I

obtained in Reference Example 4 above was used in place of the compound of the formula:

CF₃(CF₂)₃(CH₂CF₂)(CF₂CF₂)₂(CH₂CH₂)I = C₄F₉CH₂(CF₂)₅CH₂CH₂I

As a result, 2.5 g (yield: 78%) of a compound of the formula: C₂F₅CH₂(CF₂)₅CH=CH₂, which was a fraction with a vapor pressure of 63 to 65°C/1 kPa, was obtained as a product D.

- Product D:: 3,3,4,4,5,5,6,6,7,7,9,9,10,10,10-pentadecafluoro-1-decene CF₃CF₂CH₂CF₂CF₂CF₂CF₂CF₂CH=CH₂
- ¹H-NMR (CDCl₃, TMS):: δ2.89 (CH₂CF₂) 5.79 (CH=CH₂) 5.97 (CH=CH₂)
- ¹⁹F-NMR (CDCl₃, C₆F₆):: ppm -87.1 (CF₃) -116.8 (CF₃CF₂CH₂CF₂) -113.0 (CF₃CF₂CH₂CF₂) -121.5 (CH₂CF₂CF₂CF₂) -124.1 (CH₂CF₂CF₂CF₂) -124.2 (CF₂CF₂CH=CH₂) -114.8 (CF₂CF₂CH=CH₂)

(2) In a 1-L, four-necked flask equipped with a thermometer and a condenser, 200 g (1.45 mol) of diethyl phosphite was charged and stirred while heating at 150°C. A mixed solution of 500 g (1.18 mol) of the pentadecafluoro-1-decene (product D; 97GC%) obtained in step (1) above and 2.8 g (19 mmol) of di-tert-butyl peroxide was added dropwise thereto. After completion of dropwise addition, the resultant mixture was further stirred for one hour. Thereafter, the reaction mixture was washed with water, and a crude reaction product separated as a lower layer was subjected to simple distillation under reduced pressure at an internal pressure of 0.2 kPa, an internal temperature of 145 to 155°C, and an overhead temperature of 138 to 141°C. Thus, 505 g (yield: 76.3%) of a purified reaction product (98GC%) was obtained.

The results of ¹H-NMR and ¹⁹F-NMR confirmed that the resulting purified reaction product was a compound represented by the following formula:

CF₃(CF₂)(CH₂CF₂)(CF₂CF₂)₂(CF₂CH₂)P(O)(OCH₂CH₃)₂

- ¹H-NMR (CDCl₃, TMS):: δ3.34 (CH₂CF₂) 2.42 (CH₂CH₂) 2.07 (CH₂CH₂) 4.13 (CH₂CH₃) 1.36 (CH₂CH₃)
- ¹⁹F-NMR (CDCl₃, C₆F₆):: ppm -85.3 (CF₃) -114.0 (CF₃CF₂CH₂CF₂) -110.1 (CH₂CF₂CF₂CF₂CF₂CF₂) -120.1 (CH₂CF₂CF₂CF₂CF₂CF₂) -122.0 (CH₂CFCF₂CF₂CF₂CF₂) -122.4 (CH₂CF₂CF₂CF₂CF₂CF₂) -113.9 (CH₂CF₂CF₂CF₂CF₂CF₂)

### Example 5

(1) In Example 1, 3.4 g of the polyfluoroalkyl iodide of the following formula:

   CF₃(CF₂)(CH₂CF₂(CF₂CF₂)(CH₂CH₂)I = C₂F₅CH₂(CF₂)₃CH₂CH₂I

   obtained in Reference Example 5 above was used in place of the compound of the formula:

   CF₃CF₂)₃CH₂CF₂)(CF₂CF₂)₂CH₂CH₂)I = C₄F₉CH₂CF₂)₅CH₂CH₂I.

   As a result, 2.1 g (yield: 87%) of a compound of the formula: C₂F₅CH₂(CF₂)₃CH=CH₂, which was a fraction with a vapor pressure of 52 to 55°C/1 kPa, was obtained as a product E.
   - Product E:: 3,3,4,4,5,5,7,7,8,8,8-undecafluoro-1-octene CF₃CF₂CH₂CF₂CF₂CF₂CH=CH₂
   - ¹H-NMR (CDCl₃, TMS):: δ2.89 (CH₂CF₂) 5.79 (CH=CH₂) 5.97 (CH=CH₂)
   - ¹⁹F-NMR (CDCl₃, C₆F₆):: ppm -87.1 (CF₃) -116.8 (CF₃CF₂CH₂CF₂) -111.6 (CF₃CF₂CH₂CF₂) -111.9 (CF₂CF₂CH=CH₂) -114.8 (CF₂CF₂CH=CH₂)
(2) In a 1-L, four-necked flask equipped with a thermometer and a condenser, 262 g (1.90 mol) of diethyl phosphite was charged and stirred while heating at 150°C. A mixed solution of 500 g (1.58 mol) of the undecafluoro-1-octene (product E; 98GC%) obtained in step (1) above and 3.7 g (25 mmol) of di-tert-butyl peroxide was added dropwise thereto. After completion of dropwise addition, the resultant mixture was further stirred for one hour. Thereafter, the reaction mixture was washed with water, and a crude reaction product separated as a lower layer was subjected to simple distillation under reduced pressure at an internal pressure of 0.2 kPa, an internal temperature of 130 to 140°C, and an overhead temperature of 128 to 131°C. Thus, 547 g (yield: 75.7%) of a purified reaction product (98GC%) was obtained.

The results of ¹H-NMR and ¹⁹F-NMR confirmed that the resulting purified reaction product was a compound represented by the following formula:

CF₃(CF₂)(CH₂CF₂)(CF₂CF₂)(CH₂CH₂)P(O)(OCH₂CH₃)₂

- ¹H-NMR (CDCl₃, TMS):: δ3.34 (CH₂CF₂) 2.42 (CH₂CH₂) 2.07 (CH₂CH₂) 4.13 (CH₂CH₃) 1.36 (CH₂CH₃)
- ¹⁹F-NMR (CDCl₃, C₆F₆):: ppm -85.3 (CF₃) -114.0 (CF₃CF₂CH₂CF₂) -110.4 (CH₂CF₂CF₂CF₂) -122.4 (CH₂CF₂CF₂CF₂) -113.9 (CH₂CF₂CF₂CF₂)

### Reference Example 7

The phosphonic acid ester (3 wt.%) obtained in Example 1 was added to a base oil of the formula: CₙF₂ₙ₊₁(CF₂CF₂CF₂O)ₘCₙF₂ₙ₊₁ (viscosity at 40°C: 210 mm²/s), and the mixture was sufficiently stirred under heating. After the mixture was stored at 25°C for 24 hours, the solubility of the phosphonic acid ester in the base oil was visually observed. Although stagnation and slight white-muddying were observed, the phosphonic acid ester was dissolved into an almost transparent solution.

In addition, 1 wt.% of the above phosphonic acid ester was added to each of the above base oils, and the mixture was sufficiently stirred while heating. Thereafter, rust resistance was evaluated according to a rust-prevention performance test for lubricating oil type rust preventive oil (lubrication test) prescribed in JIS K2246 (rust preventive oil). The evaluation was carried out by counting the number of rust spots in a test piece after 240 hours. The result was such that the number of rust spots was in the range of 1 to 10, showing somewhat better rust resistance.

## Claims

1. A process for producing a polyfluoroalkylphosphonic acid ester represented by the general formula:
CₙF₂ₙ₊₁(CH₂CF₂)ₐ(CF₂CF₂)_{b}(CH₂CH₂)P(O)(OR)₂ [I]
wherein R is an alkyl group having 1 to 4 carbon atoms, n is an integer of 1 to 6, a is an integer of 1 to 4, and b is an integer of 1 to 3, the process comprising subjecting a polyfluoro-1-alkene represented by the general formula:
CₙF₂ₙ₊₁ (CH₂CF₂)ₐ(CF₂CF₂)_{b}CH=CH₂ [III]
wherein n, a, and b are as defined above, to an addition reaction with a dialkyl phosphite represented by the general formula:
(RO)₂P(O)H
wherein R is as defined above, and wherein the addition reaction is carried out in the presence of an organic peroxide.

2. The process for producing a polyfluoroalkylphosphonic acid ester according to claim 1, wherein the polyfluoro-1-alkene [III] is a compound obtained by a terminal HI-elimination reaction of a polyfluoroalkyl iodide represented by the general formula:
CₙF₂ₙ₊₁ (CH₂CF₂)ₐ(CF₂CF₂)_{b}(CH₂CH₂)I [II]
wherein n is an integer of 1 to 6, a is an integer of 1 to 4, and b is an integer of 1 to 3.

## Patentansprüche

1. Verfahren zur Herstellung eines Polyfluoralkylphosphonsäureesters, dargestellt durch die allgemeine Formel:
CₙF₂ₙ₊₁(CH₂CF₂)ₐ(CF₂CF₂)_{b}(CH₂CH₂)P(O) (OR)₂ [I] ,
worin R eine Alkylgruppe mit 1 bis 4 Kohlenstoffatomen ist, n eine ganze Zahl von 1 bis 6 ist, a eine ganze Zahl von 1 bis 4 ist und b eine ganze Zahl von 1 bis 3 ist, wobei das Verfahren Unterwerfen eines Polyfluor-1-alkens, dargestellt durch die allgemeine Formel:
CₙF₂ₙ₊₁(CH₂CF₂)ₐ(CF₂CF₂)_{b}CH=CH₂ [III],
worin n, a und b wie oben definiert sind, einer Additionsreaktion mit einem Dialkylphosphit, dargestellt durch die allgemeine Formel:
(RO)₂P(O)H,
worin R wie oben definiert ist, umfasst, und wobei die Additionsreaktion in Gegenwart eines organischen Peroxids durchgeführt wird.

2. Verfahren zur Herstellung eines Polyfluoralkylphosphonsäureesters gemäß Anspruch 1, wobei das Polyfluor-1-alken [III] eine Verbindung ist, die durch eine terminale HI-Eliminierungsreaktion eines Polyfluoralkyliodids, dargestellt durch die allgemeine Formel:
CₙF₂ₙ₊₁(CH₂CF₂)ₐ(CF₂CF₂)_{b}(CH₂CH₂) I [II],
worin n eine ganze Zahl von 1 bis 6 ist, a eine ganze Zahl von 1 bis 4 ist und b eine ganze Zahl von 1 bis 3 ist, erhalten wird.

## Revendications

1. Un procédé de production d'un ester d'acide polyfluoroalkylphosphonique représenté par la formule générale
CₙF₂ₙ₊₁(CH₂CF₂)ₐ(CF₂CF₂)_{b}(CH₂CH₂)P(O)(OR)₂ [I]
dans laquelle R est un groupe alkyle ayant de 1 à 4 atomes de carbone, n est un nombre entier de 1 à 6, a est un nombre entier de 1 à 4 et b est un nombre entier de 1 à 3, le procédé comprenant la soumission d'un polyfluoro-1-alcène représenté par la formule générale:
CₙF₂ₙ₊₁(CH₂CF₂)ₐ(CF₂CF₂)_{b}CH=CH₂ [III]
dans laquelle
n, a et b sont tels que définis ci-dessus, à une réaction d'addition avec un phosphite de dialkyle représenté par la formule générale
(RO)₂P(O)H
dans laquelle R est tel que défini ci-dessus; et dans lequel la réaction d'addition est effectuée en présence d'un peroxyde organique.

2. Le procédé de production d'un ester d'acide polyfluoroalkylphosphonique selon la revendication 1, dans lequel le polyfluoro-1-alcène [III] est un composé obtenu par une réaction d'élimination terminale d'HI d'un iodure de polyfluoroalkyle représenté par la formule générale:
CₙF₂ₙ₊₁(CH₂CF₂)ₐ(CF₂CF₂)_{b}(CH₂CH₂) I [II]
dans laquelle n est un nombre entier de 1 à 6, a est un nombre entier de 1 à 4 et b est un nombre entier de 1 à 3.
